# EUROPEAN PATENT APPLICATION

(11) **EP 3 733 626 A1**
(43) Date of publication of application: **04.11.2020**
(21) Application number: 17936179.5
(22) Date of filing: 27.12.2017
(51) Int. Cl.: C04B 18/16

(54) **METHOD FOR OBTAINING RECYCLED AGGREGATES, MATERIALS AND PRODUCTS FOR CONSTRUCTION BY RECYCLING CONSTRUCTION AND DEMOLITION WASTE**

(71) Applicant: Mori Pérez, Walter Aurelio, Lima 12 (PE); Mori Pizzino, Roger Walter, Lima 12 (PE)
(72) Inventor: Mori Pérez, Walter Aurelio, Lima 12 (PE); Mori Pizzino, Roger Walter, Lima 12 (PE)
(74) Representative: Herrero & Asociados, S.L.
(86) International application number: PCT/PE2017/000034
(87) International publication number: WO 2019/132675

(57) **Abstract**

This request is about a process for assembling recycled aggregates from construction and demolition waste, such as debris and waste generated within the construction industry, such as: bad mixtures of concrete, bricks, tiles, stones, plasters, ceramics; as well as residues from the cleaning of concrete mixers in pre-mixed plants which produce pavements, foundry slags, mortars and/or concrete. Likewise, it relates to the formulation of said aggregates and to construction products obtained through them.

## Description

### TECHNICAL FIELD

This invention relates to a method or process for assembling recycled aggregates using construction and demolition waste produced in the construction industry, demolition and/or remodeling of buildings, such waste include: concrete waste, ceramic and/or concrete bricks, tiles, stones, plasters, ceramics; also from other sources which include residues of the cleaning of concrete mixers in pre-mixing plants which produce road surfaces (pavements), from foundry slags, in mortars and/or concrete. Furthermore, the invention relates to the formulation of said aggregates and to construction products assembled using said aggregates such as concrete blocks, pavers, tiles and the like.

### BACKGROUND

Aggregates are solid granular materials from natural resources which are used intensively in the construction industry. Usually, the term aggregate refers to the mix of sand and stone of variable grain size that is used as a complement to cement and/or concrete in the construction industry.

The importance of the aggregates' quality and nature lies not only in the finish and final appearance of the concrete, but also in its relevant characteristics such as consistency and ease of working, as well as durability, resistance, elastic and thermal properties, among others.

Currently, the construction industry uses dry mixtures of conventional products with natural resource aggregates, neglecting the possibility of using the construction and demolition waste as basic raw materials to make such dry mixtures.

The increasing extraction and use of natural resource aggregates brings along problems associated with the exploitation and exhaustion of these resources, the increasing difficulty of obtaining high-quality natural resource aggregates as well as environmental problems in the ecosystems from which they are extracted.

On the other hand, a large amount of concrete and brick waste is also currently generated as a result of demolitions, improvements and remodeling of buildings; also as residues caused by the cleaning of concrete mixers in ready-mix plants which produce pavements, mortars and/or concretes. Approximately half of these concrete waste materials are reused in road paving, filler materials, and so on, but the other half is discarded for the most part, generating problems of adequate spaces to store such waste and of significant cost overruns due to the transport and disposal of such construction and demolition waste.

In other words, on one hand, we have that the collection of natural resource aggregates, especially of high quality ones, such as gravel and river sand, is becoming increasingly difficult to get done; and on the other hand, we have a worrisome problem to efficiently and sustainably eliminate construction and demolition waste, such waste being usually discarded on the cliffs in order to gain useful areas to the sea, causing a lot of pollution and not being desirable for the protection of the environment.

This proposed invention relates to the process for obtaining recycled aggregates based on the processing and reuse of construction and demolition waste, and also relates to the different possible forms of said aggregates, as well as to construction products manufactured with said recycled aggregates. In this way, it is possible to give a new commercial use to these materials that are usually discarded, solving along the problems associated with the difficulty of their adequate disposal.

This invention contributes to a lessening of the environmental impact caused by the construction industry because there is no need of areas for the disposal of the waste and, also, it avoids the overloading of the existing ones, and, furthermore, the need to open new quarries for the extraction of natural resource aggregates, like sand and gravel, is significantly reduced.

In the state of the art, very few attempts are mentioned over the use of certain construction waste, although partially and in a limited way, which in no case compares to the scope and technical characteristics proposed by this invention.

For example, the patent JP2008247680 published on October 16, 2008 discloses how to assemble concrete using concrete waste of different nominal strengths, kneading these residues and adding a setting retarder to the kneaded material in order to harden or develop a desired resistance. This method fails to describe the method for processing and reusing construction and demolition waste, and does not specifically disclose aggregates or dry mixtures of different nature obtained from the processing of construction waste including not only concrete or concrete waste, but also brick waste, stones, floor tiles, wall tiles, ceramic, gravel, etc.

On the other hand, the patent CN1579984 published on February 16, 2005 discloses a brick made based on construction waste (without specifying which waste or how they are obtained), gravel and cement in order to avoid discoloration present on the walls made with traditional bricks; for this, the use of Fly Ash is eliminated, the brick employs a mineral additive used in concrete or mortar that is in direct contact with moisture or water, which increases impermeability, chemical and mechanical resistance and cohesiveness of concrete and mortar.

### DESCRIPTION OF THE INVENTION

This proposed invention consists in the development of a process for the manufacture of construction products of various types, which will replace the use of conventional aggregates, as the main raw material, with the use of recycled aggregates, this being possible by the processing of construction waste. The recycled aggregates thus obtained and the final manufactured products with said aggregates will also be protected.

A critical issue in this invention, considering it as a solution to the technical problem posed herein, is to obtain the right aggregate particle size applying the proposed method in the processing of construction and demolition waste. The particle size will be determined by the type of product to be manufactured, the minimum cavity of the mold and the pattern of particles thrown out by the crusher.

The proposed process herein starts with the collection and segregation of construction waste in a way that, after applying a crushing and sieving process, they are reused to produce construction products.

As a first step, waste is obtained from construction works, renovation or remodeling works, and from demolition of infrastructures. Then a segregation process of the materials that do not enter the recycling process is carried out, these materials can be metals, construction rods, paper, cardboard, expanded polystyrene (EPS), broken glass, wood and all solid waste not related to the construction activity. In the next step, such remains of concrete, stone, gravel, mortars and clay materials are transported to the crusher for their subsequent crushing process.

Once the construction and demolition wastes are crushed, after going through a task of selection and cleaning, they are sieved in order to obtain the particles of the required size for the type of product to be fabricated. The sieving process is carried out through the use of a vibrating or rotating screen, equipment that has several overlapping meshes that will separate the recycled aggregates into different particle sizes.

The screen is designed to have four levels of separation, the base of each level being a mesh that will differ from the meshes of the other levels by their size, so that the upper mesh is the first mesh, and the lower mesh is the fourth mesh. The fourth mesh will segregate the finest recycled aggregates, which must have particle sizes ranging from 0 to 2.5 millimeters, these aggregates are collectively referred to as "fine recycled aggregates". The third mesh will segregate aggregates that have particle sizes ranging from 2.5 to 5 millimeters, which together are called "coarse recycled aggregates". The second mesh will segregate aggregates that have particle sizes ranging from 5 to 9 millimeters, which together are called "confectionery". Finally, the first mesh will segregate aggregates that have particle sizes ranging above 9 millimeters, which will be returned to the crusher in order to reduce their size.

For further knowledge, the detailed process for obtaining recycled aggregates based on construction and demolition waste that is to be protected herein consists of the following stages:
1. Segregating and choosing of construction and demolition waste. In this stage, the metallic and ferrous elements, broken glass, paper, cardboard, plastic, expanded polystyrene (EPS) and all solid waste, not related to the construction activity, will be separated. The elements that will enter the crushing process are concrete remains, stone materials, mortars, clay materials and the like.
2. Crushing the selected elements mentioned in Step 1 with a conventional crusher.
3. Sieving or shaking of the selected and crushed waste. At this stage, the final recycled aggregates are produced, which are of 3 types: fine recycled aggregate, coarse recycled aggregate and confectionery, depending on the particle size obtained: from 0 to 2.5 millimeters for fine recycled aggregates, from 2.5 to 5 millimeters for coarse recycled aggregates and from 5 to 9 mm for confectionery. Crushed waste with a particle size greater than 9 millimeters will be sent back to step 2.

The recycled aggregates thus obtained will be ready to be sold as construction aggregates or to be mixed with other inputs in the manufacture of prefabricated materials such as concrete pavers, bricks, concrete blocks, tiles and the like. The recycled aggregates can also be used for mixing in the elaboration of other products such as concrete (crushed stone, coarse recycled aggregate and cement), mortar (coarse recycled aggregate and cement) and plastering (fine recycled aggregate and cement).

The following production process is carried out to manufacture the product "concrete paver":
1. By means of a horizontal-axis mixing machine or one of a "pan" type, a mixture is made which has 30% of fine recycled aggregate, 44% of coarse recycled aggregate, 13% of binder, which can be Portland cement or manufactured ecological cement with industrial residues, and 13% of water, mixing it until it becomes a semi-dry mixture.
2. Taking the mixture to a vibro-compactor machine which has a concrete paving stone mold. The concrete pavers to be so manufactured must meet the requirements of the Peruvian Technical Regulations (NTP, as per its acronym in Spanish) 399.611 or equivalent standard; they will be rectangular in shape and should be 20 centimeters long and 10 centimeters wide. Their height will depend on the type of concrete paver to be manufactured, since they can be a pedestrian type with a height of 4 centimeters, a light vehicle type with a height of 6 centimeters and a heavy vehicle type with a height of 8 centimeters.
3. Once the mixture has been vibrated and compacted, the concrete pavers will be removed from the machine.
4. The concrete pavers go through a curing process, in which, for a period of three days, they will have constant contact with water, either by submerging them in a pool of water or by being sprinkled on.
5. After the curing process, the concrete pavers will be dried for a period of 20 days in a cool and covered place, with no direct contact with sunlight.

The following production process is carried out for manufacturing the "King Kong 18-hole brick" product:
1. By means of a horizontal-axis mixing machine or one of a "pan" type, a mixture is made that has 30% of fine recycled aggregate, 44% of coarse recycled aggregate, 21% of binder, which can be Portland cement or manufactured ecological cement with industrial residues, and 5% of water, mixing it until it becomes a semi-dry mixture.
2. Taking the mixture to a vibro-compactor machine that contains a King Kong brick mold. The bricks to be so manufactured must meet the requirements of Technical Regulation E.070 for bricks for structural purposes of class IV or equivalent standard. The manufacturing mold must produce bricks 9 centimeters high, 23 centimeters long and 13 centimeters wide.
3. Once the mix has been vibrated and compacted, the bricks will be removed from the machine.
4. The bricks will go through a curing process, in which, for a period of three days, they will have constant contact with water, either by submerging them in a pool of water or by being sprinkled on.
5. Once the curing process is done, the bricks will be dried for a period of 20 days in a cool and covered place, with no direct contact with sunlight.

The following production process is carried out for manufacturing the "concrete block" product:
1. By means of a horizontal mixing machine or one of a "pan" type, a mixture is made that has 24% of fine recycled aggregate, 35% of coarse recycled aggregate, 23% of confectionery, 16% of binder, which can be type cement Portland or ecological cement made with industrial waste, and 2% of water, until obtaining a semi-dry mix.
2. Taking the mixture to a vibro-compactor machine containing a block mold. The blocks to be so manufactured must meet the requirements of the Peruvian Technical Regulation (NTP, as per its acronym in Spanish) 399.602 or equivalent standard. The blocks will be rectangular in shape and should be 39 centimeters long and 19 centimeters wide. The height can be varying of 9, 12, 14 and 39 centimeters.
3. Once the mixture has been vibrated and compacted, the blocks will be removed from the machine.
4. The blocks will go through a curing process, where, for a period of three days, they will have constant contact with water, either by submerging them in a pool of water or by being sprinkled on.
5. After the curing process, the blocks will be dried for a period of 20 days in a cool and covered place, with no direct contact with sunlight.

The features and multiple possibilities of the recycled aggregates which are assembled by means of this described process herein, allow the development of different construction products aside from the well-known bricks, concrete blocks, concrete pavers and tiles; consequently, the present description is not intended to limit the many possibilities and alternatives for using these recycled aggregates. Any expert in the technical field can infer many new products by using the techniques and processes made known herein in base of the raw materials (aggregates) described here.

The advantages offered by the aggregates obtained through this process are quite impressive since, primarily, they are a mixture of excellent quality, besides using a minimum percentage of water-being a dry mixture, also having a market price equal to or less than the conventional aggregates, and with the very important benefit of being an eco-friendly and sustainable product.

Other advantages offered by these products compared to conventional aggregates are:
- Cost savings: The purchase of pre-manufactured materials (bricks, pavers, blocks, etc.) and the aggregates for their installation (recycled aggregates) as a whole have a lower price when compared to purchasing pre-manufactured materials and aggregates for their conventional installation, adding to this the logistical cost. For example, for a user to install 1 m2 of conventional concrete pavers (manufactured with natural resource aggregates), they must purchase an average of 50 units of paving stones, 0.05 m3 of conventional coarse aggregate for the bed layer and 0.0075 m3 of conventional fine aggregate for the sealing layer. Instead, this same user can collectively purchase the same number of pavers made from recycled aggregates and the same number of fine and coarse recycled aggregates, at a lower price than conventional ones.
- Does not contain salts
- Waste is minimal
- The brick does not have deformations, since it does not go through a heating process compared to clay brick
- A brick wall made from recycled aggregates requires less amount of plastering material than a clay brick wall.

### SHORT DESCRIPTION OF THE FIGURE

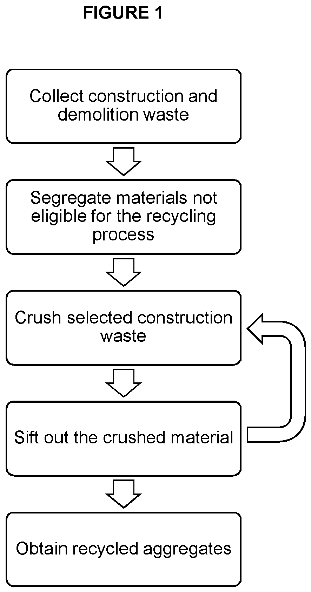

**Figure 1****:** Flow diagram showing the steps of the process for obtaining aggregates from construction and demolition waste.

## Claims

1. A process for obtaining aggregates from construction and demolition waste, wherein the process comprises the following steps:
a. collecting construction and demolition waste;
b. separating the materials that do not enter the recycling process, these materials can be metals, pieces of construction rods, paper, cardboard, expanded polystyrene (EPS), broken glass, wood and all solid waste unrelated to the construction activity;
c. transporting the remains of concrete, stone, gravel, mortars and clay materials to the crusher for their subsequent crushing;
d. sifting out the crushed material, through a vibrating or rotating screen, equipment that consists of several overlapping meshes that separate the recycled aggregates into different particle sizes; where the resulting recycled aggregates are: fine recycled aggregate (0 - 2.5 millimeters), coarse recycled aggregate (2.5 - 5 millimeters) and confectionery (5 - 9 millimeters); aggregates with a particle size greater than 9 millimeters will re-enter the crushing process (Step c).

2. A concrete paver made up of recycled aggregates obtained by the process detailed in claim 1, which is composed of the following semi-dry mix formulation: 30% of fine recycled aggregate, 44% of coarse recycled aggregate, 13% of binder, which can be the Portland-type cement or the ecological cement made with industrial waste, and 13% of water; which for installation of the pavers requires that the bed layer under the pavers have recycled coarse aggregate and the sealing layer above the pavers have recycled fine aggregate.

3. An 18-hole King Kong-type brick made up of recycled aggregates obtained by the process detailed in claim 1, which is composed of the following semi-dry mix formulation: 30% of fine recycled aggregate, 44% of coarse recycled aggregate, 21% of binder, which can be Portland cement or ecological cement made with industrial waste, and 5% of water.

4. A concrete block made up of recycled aggregates obtained by the process detailed in claim 1, which is composed of the following semi-dry mix formulation: 24% of fine recycled aggregate, 35% of coarse recycled aggregate, 23% of confectionery 16% of binder, which can be Portland cement or ecological cement made with industrial waste, and 2% of water.
